# NEW EUROPEAN PATENT SPECIFICATION

(11) **EP 0 610 062 B2**
(45) Date of publication and mention of the opposition decision: **29.03.2006**
(45) Mention of the grant of the patent: 13.05.1998
(21) Application number: 94300729.4
(22) Date of filing: 01.02.1994
(51) Int. Cl.: A01D 43/063

(54) **Improvements in and relating to collection devices**
Sammelbehälter
Dispositif collecteur

(30) Priority: 01.02.1993 GB 9301932
(43) Date of publication of application: 10.08.1994
(73) Proprietor: ELECTROLUX OUTDOOR PRODUCTS LIMITED, Newton Aycliffe, Co Durham DL5 6UP (GB)
(72) Inventor: Kirton, Peter John, Newton Aycliffe, County Durham DL5 7PU (GB); Sowerby, David, Bishop Auckland, County Durham DL14 7SD (GB)
(74) Representative: Wright, Howard Hugh Burnby

(56) References cited:
- EP-A- 0 072 572
- EP-A- 0 457 432
- EP-A- 0 457 433
- EP-A- 0 501 674
- FR-A- 1 509 683
- FR-A- 2 592 547
- GB-A- 2 223 923
- JP-U- 416 114
- JP-U- 63 107 116
- US-A- 3 006 128
- US-A- 3 421 302
- US-A- 4 095 398
- US-A- 4 310 998
- US-A- 4 532 755
- US-A- 4 566 257
- US-A- 4 648 238
- US-A- 4 836 610
- US-A- 4 989 400
- US-A- 5 195 310

## Description

This invention relates to a collection device for collecting grass cuttings from a lawn mowing machine of a type which positions the collection device in the path of an operator as the lawn moving machine is moved forwards and which entrains the grass cuttings in a stream of air.

EP A 0501674 discloses a lawnmower having a collecting facility whereby grass cuttings are collected firm the ground by a stream of air which is sucked into the machine by an impeller which blows air into a cutting chamber. The grass cuttings are removed from the stream of air by an air-permeable container.

Although certain rotary mowers particularly for domestic use do not have a facility for collecting grass cuttings and other debris from a lawn, many rotary and cylindrical type domestic lawnmowers do include such a facility. Grass cut by a rotary lawnmower is directed into a grass-box when entrained in a stream of air created by rotation of the rotary cutter. Cornentionally the cut grass is collected in a grass-box, and air is exhausted from the grass-box through a number of air vents or louvres. Although, the grass cuttings and other debris are retained within the grass-box, nevertheless it is not unusual for a considerable amount of dust and other small particles of waste to be exhausted in the stream of air leaving the grass-box. By virtue of the positioning of the vents or louvres, this exhaust stream is directed into the path of the machine operator. Furthermore, conventional construction of grass-boxes does not serve to reduce the noise emitted from a lawnmower

It is an aim of the present invention not only to improve the collection facility of grass cutting from a lawn mowing machine, but also to reduce the noise level emitted by a machine.

The present invention provides a collection device for collecting according to claim 1.

One form of the device includes one or more projections extending between the receptacle and the outer housing so that the projections and the confronting regions together constitute duct means for leading exhaust air from the device through at least one air-permeable region serving to establish access between the interior of the receiving receptacle and the duct means. The region of the receptacle which confronts the outer housing to at least partially define the cavity means preferably includes the air-permeable region.

According to one embodiment of the invention, the receiving receptacle comprises a first wall including an inlet for material entering the receptacle, a base and two further walls, each further wall being joined to the base and the first wall. At least one of the two further walls will normally include the air-permeable region. In this embodiment, the receiving receptacle is of generally rectangular form having an open area opposite from the first wall, and the receptacle is pivotally mounted within the outer housing at a position in the region of the first wall, and the open base of the outer housing permits pivotal movement of the receptacle to allow removal of material therefrom through the said open area and the open base of the housing. In this embodiment the outer housing is of generally rectangular form, and includes two side walls disposed respectively in confronting and spaced apart relationship with said two further walls to constitute the cavity means.

The housing extends downwards, in use, substantially to the ground. The housing could include means for attaching a collector thereto so that, during pivotal movement of the receptacle, material from the receptacle is fed into the collector.

Preferably, the receiving receptacle includes an inlet for material entering the receptacle from the machine, and said cavity means is disposed on the side of the inlet remote from the machine. The device is particularly applicable for collecting grass cuttings from a lawnmower machine of the type having a cutter blade rotatable about a generally vertical axis. Preferably, the receiving receptacle includes a plurality of projections so as to maintain a space between the receptacle and confronting walls

A form of collection device in accordance with the present invention will now be described by way of example with reference to the accompanying drawings in which:
Figure 1 is a perspective view of an outer housing of a collector;
Figure 2 is a perspective view of a receiving receptacle of the collector;
Figure 3 is a partially cut-away perspective view showing the receiving receptacle mounted within the outer housing;
Figure 4 is a side view of the collection device showing an additional collector detachably secured to the outer housing;
Figure 5 shows the collection device in an open position whereby grass and other debris is fed from the receiving receptacle into the additional collector;
Figure 6 is a exploded perspective view of a grass-box emptying indicator included in an upper component of a two part housing.

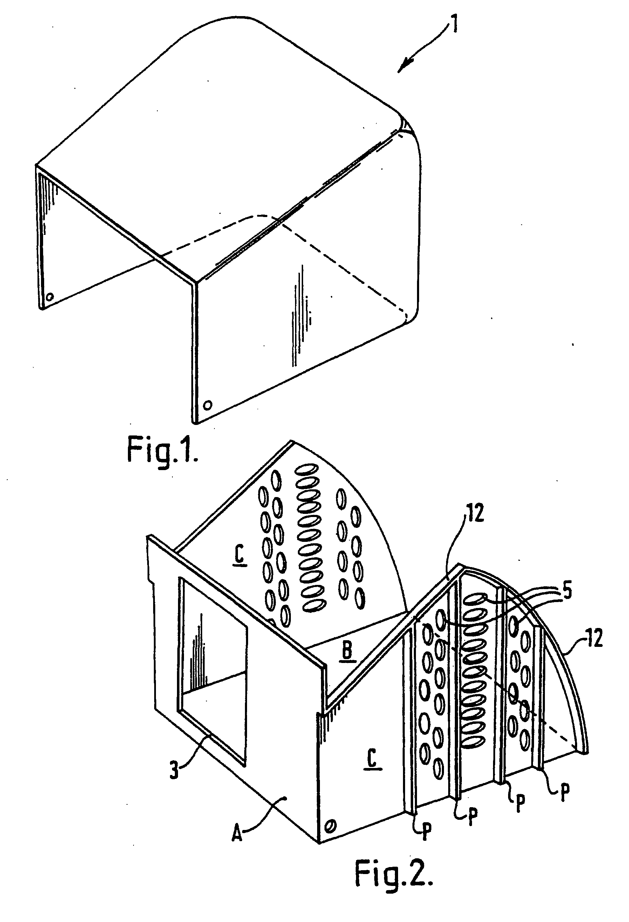

Referring to Figure 2, a receiving receptacle has a first wall A including an inlet 3 for material to enter the receptacle, a base B and two further side walls C which, as indicated, are joined both to the base B and the first wall A. Each side wall C includes four projections P, between adjacent pairs of which a plurality of perforations 5 are formed.

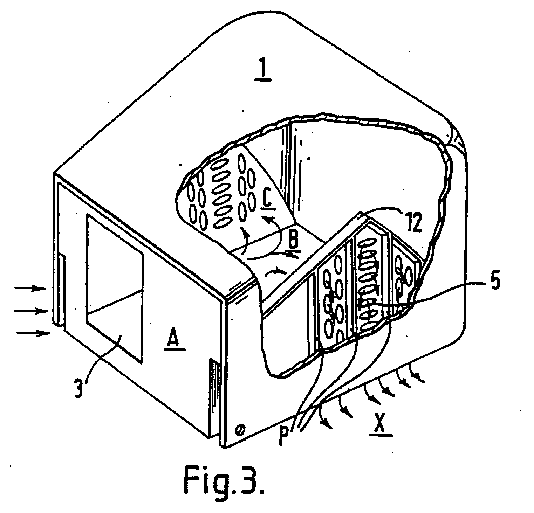

Referring to Figures 1, 2 and 3, the receiving receptacle is pivotally mounted within an outer housing 1, the housing having an open end corresponding to the first wall A of the receiving receptacle and an open base. In order to permit pivotal movement of the receptacle into and out from the outer housing 1, the ends of the two further side walls C of the receptacle furthest from the first wall A are curved as indicated in Figure 2. Further it will also be seen from Figure 2 that each further side wall includes a flange 12 extending over the uppermost edge of each side wall C, as well as the curved region to form open channels between adjacent pairs of projections P. The projections P (see Figure 3) are disposed in close proximity to the inner faces of the side walls of the outer housing and, together with those side walls, form ducts. In operation, it will be appreciated that cut grass and debris entrained in the stream of air entering the receptacle through the inlet 3 collects in the receptacle, whereas air and any finely divided dust or other fine particulate material escapes through the perforations 5, and is exhausted downwardly from the base of the collection device as indicated by arrows X

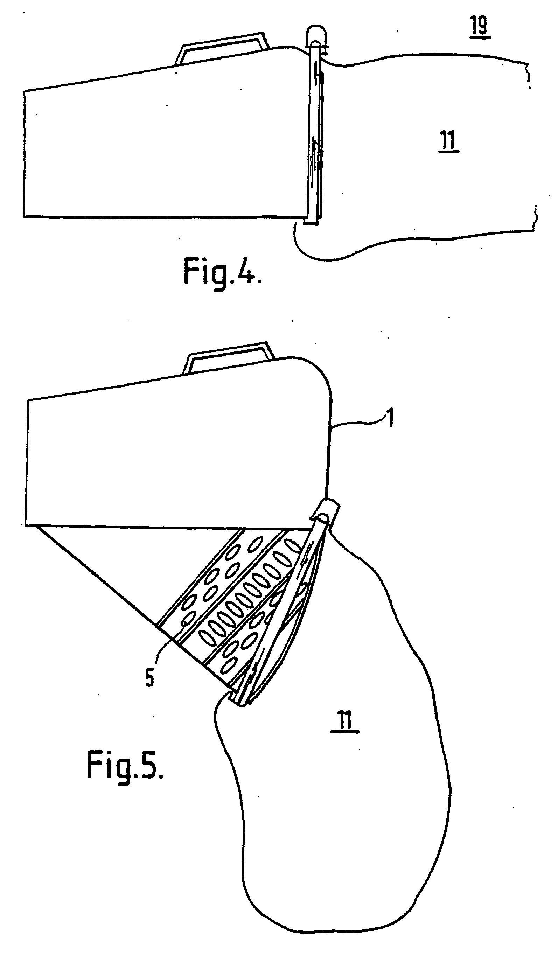

When the receiving receptacle has been filled with grass cuttings and other debris, a latch (not shown) is released permitting the receptacle to be pivoted, relative to the outer housing 1, into a position similar to that shown in Figure 5, and the collected grass cuttings are emptied, If it is desired to collect the contents received in the receptacle an additional collector bag 11 may be attached to the receptacle by attachment means, as shown in Figures 4 and 5, thereby permitting ready disposal of the collected waste material.

It will be appreciated from the foregoing that since air and any airborne dust entrained in the air is exhausted vertically downwardly and to the ground as indicated by arrows X (see Figure 3) the vast majority of dust which naturally escapes from the collection device will not be forced into the path of a user of the lawn-mower.

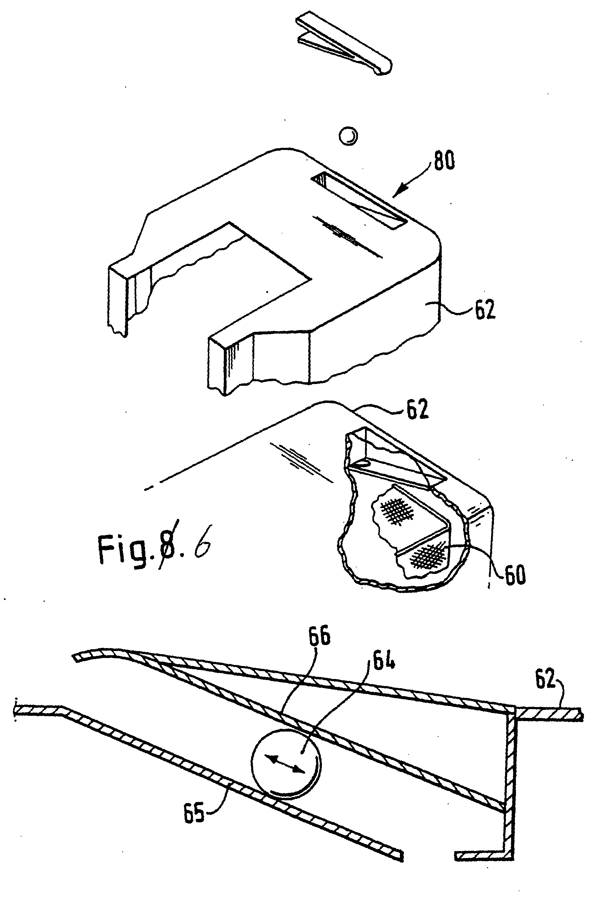

Figure 6 shows a grass collector emptying indicator 80 in the upper component 62. The indicator 80 indicates to an operator when the machine has ceased collecting grass cuttings. The operator may then empty the grass collector and/or remove any blockage which has formed in the grass carrying passages within the machine. Many collection devices operate by forcing air and debris into a box or bag. The indicator 80 operates by bleeding a small quantity of air from the collector or bag to displace a lightweight ball 64 made, for example, of polystyrene foam. The air flow urges the ball 64 up an inclined wall 65 formed within the upper component 62 and is restrained vertically by a clear guide 66 to allow the indicator to be observed. The indicator 80 could be positioned independently of the housing 61/62 and constructed as a separate assembly An empty collector will be indicated by the indicator ball 64 moving up the inclined wall 65 and a full box or blocked air flow will be shown by the indicator ball 64 moving down the incline. A similar indicator could be formed by an indicator moving horizontally or floating vertically. The indicator performance is improved by using air which has been filtered of most debris, so that the indicator can be situated on the "clean side" of the screen wall 60. Alternatively, the indicator assembly could be produced with a separate filter/screen. Since some debris is likely to occasionally be carried into the indicator area, the guide can be easily removed and re-fitted to allow easy cleaning.

Alternatively, an indicator could operate on a slightly different principle. For example, exhaust air could be directed across one end of a passage along which the indicator would be drawn due to the induced draught. This would have the advantage of allowing the indicator to be moved by clean air.

The outer housing and receiving receptacle of a grass collector may be made from rigid, semi-rigid or flexible materials or combinations of such materials. In the case of flexible-materials, the outer housing may be made from a non-permeable material, and the receptacle may be made from an air-permeable material. Further, where flexible materials are used, they may be formed as a lay-flat or foldable structure thereby assisting in their packaging. Where such flexible materials, e.g. fabrics are used, the air-permeable receptacle may be stitched or otherwise attached to the non-permeable outer housing, so as to create one or more channels therebetween opening downwardly so that pressure air exits downwardly to the lawn.

## Claims

1. A collection device for collecting grass cuttings from a lawn mowing machine of a type which positions the collection device in the path of an operator as the lawn mowing machine is moved forwards and which entrains said grass cuttings in a stream of air, the device comprising an outer housing (1) having an open base, a receiving receptacle locatable within the outer housing (1) for receiving the so-entrained grass cuttings, the receptacle including at least one air-permeable region permitting air to exit from the receiving receptacle, and cavity means for leading exhaust air *downwardly* from the device directly to the ground through the open base of the outer housing (1), wherein the partially defined by confronting regions of the receptacle and the outer housing, *the outer housing extending to the bottom of the receptacle.*

2. A device according to claim 1, further comprising one or more projections (P) extending between the receptacle and the outer housing (1), the projections (P) and the confronting regions together constituting duct means for leading exhaust air from the device.

3. A device according to claim 2, wherein the said at least one air-permeable region establishes access between the interior of the receiving receptacle and the duct means.

4. A device according to any one of the preceding claims, wherein the region of the receptacle which confronts the outer housing (1) to at least partially define the cavity means includes the air-permeable region.

5. A device according to any one of claims 1 to 4, wherein the outer housing extends downwards, in use, substantially to the ground.

6. A device according to any one of the preceding claims, wherein the receiving receptacle comprises a first wall (A) including an inlet (3) for grass cuttings entering the receptacle, a base (B), and two further walls (C), each further wall (C) being joined to the base (B) and the first wall (A).

7. A device according to claim 6, wherein at least one of the two further walls (C) includes the air-permeable region.

8. A device according to claim 6 or claim 7, wherein the receiving receptacle is of generally rectangular form having an open area opposite from the first wall (A), wherein the receptacle is pivotally mounted within the outer housing (1) at a position in the region of the first wall (A), and the open base of the outer housing (1) permits pivotal movement of the receptacle to allow removal of grass cuttings therefrom through the said open area and the open base of the housing.

9. A device according to claim 8, wherein the outer housing (1) is of generally rectangular form, and includes two side walls disposed respectively in confronting and spaced apart relationship with the said two further walls (C) of the receptacle to constitute the cavity means.

10. A device according to claim 9, wherein the outer housing (1) includes means for attaching a collector (11) thereto so that, during pivotal movement of the receptacle, grass cuttings from the receptacle are fed into the collector (11).

11. A device according to any one of claims 1 to 3, wherein the receiving receptacle includes an inlet (3) for grass cuttings entering the receptacle from the machine, and said cavity means is disposed on the side of the inlet (3) remote from the machine.

12. A device according to any one of the preceding claims adapted and arranged for collecting grass cuttings from a lawnmower machine of the type having a cutter blade rotatable about a generally vertical axis.

13. A grass cutting machine including a device according to any one of claims 1 to 11 for receiving cut grass entrained in a stream of air, the machine arranged such that, as it moves forward, the collection device is in the path of an operator.

14. A machine according to claim 13, further comprising means for detachably removing the device from the machine.

15. A machine according to claim 13 or claim 14 as dependent upon any one of claims 6 to 11, wherein the outer housing (1) includes an opening located in alignment with the inlet (3) in the receiving receptacle.

16. A machine according to any one of the preceding claims, wherein the outer housing (1) is of generally rectangular form having four walls, an open base and an open end.

## Patentansprüche

1. Sammelbehälter zum Auffangen von Rasenschnitt von einem Rasenmäher, bei welchem der Sammelbehälter in der Bewegungsbahn des Benutzers angeordnet ist, wenn der Rasenmäher vorwärts bewegt wird und wobei dieser Rasenschnitt in einem Luftstrom mitgerissen wird,
**gekennzeichnet durch**
ein Außengehäuse (1) mit einer offenen Unterseite, einem Fangbehälter, welcher innerhalb des Außengehäuses (1) zum Auffangen des in vorstehender Weise mitgerissenen Rasenschnitts anordbar ist, wobei der Fangbehälter mindestens einen luftdurchlässigen Bereich aufweist, welcher den Luftaustritt aus dem Fangbehälter ermöglicht, sowie eine räumlich umschlossene Einrichtung zum nach unten Fortleiten der aus dem Behälter entweichenden Luft **durch** die offene Unterseite des Außengehäuses (1) direkt zum Boden, wobei die räumlich umschlossene Einrichtung zumindest teilweise **durch** sich gegenüberliegende Bereiche des Fangbehälters und des Außengehäuses gebildet wird, und wobei sich das Außengehäuse bis zum Boden des Fangbehälters erstreckt.

2. Sammelbehälter nach Anspruch 1,
**dadurch gekennzeichnet, dass**
ein oder mehrere Vorsprünge (P) zwischen dem Fangbehälter und dem Au-βengehäuse (1) angeordnet sind, wobei die Vorsprünge und die sich gegenüberliegenden Bereiche eine kanalartige Einrichtung zur Herausleitung der Abluft aus dem Behälter bilden.

3. Sammelbehälter nach Anspruch 2,
**dadurch gekennzeichnet, dass**
mindestens, ein luftdurchlässiger Bereich einen Zugang zwischen der Innenseite des Fangbehälters und der kanalartigen Einrichtung bildet.

4. Sammelbehälter nach einem oder mehreren der vorhergehenden Ansprüche,
**dadurch gekennzeichnet, dass**
der Bereich des Fangbehälters, welcher dem Außengehäuse gegenüberliegt, um zumindest teilweise die räumlich umschlossene Einrichtung zu bilden, den luftdurchlässigen Bereich einschließt.

5. Sammelbehälter nach einem oder mehreren der Ansprüche 1 bis 4,
**dadurch gekennzeichnet, dass**
sich das Außengehäuse in Funktion im Wesentlichen bis zum Boden erstreckt.

6. Sammelbehälter nach einem oder mehreren der vorhergehenden Ansprüche,
**dadurch gekennzeichnet, dass**
der Fangbehälter eine erste Wand (A) mit einem Einlass (3) für den Rasenschnitt, der in den Fangbehälter eintritt, eine Unterseite (B) und zwei weitere Wände (C) umfasst, wobei jede weitere Wand (C) mit der Unterseite (B) und der ersten Wand (A) verbunden ist.

7. Sammelbehälter nach Anspruch 6,
**dadurch gekennzeichnet, dass**
mindestens eine der zwei weiteren Wände (C) den luftdurchlässigen Bereich enthalten.

8. Sammelbehälter nach Anspruch 6 oder 7,
**dadurch gekennzeichnet, dass**
der Fangbehälter eine im Wesentlichen quaderförmige Gestalt mit einem offenen Bereich gegenüber der ersten Wand (A) aufweist, und der Fangbehälter im Außengehäuse (1) in einer Position im Bereich der ersten Wand (A) schwenkbar angeordnet ist, und dass die offene Unterseite des Außengehäuses (1) eine Schwenkbewegung des Fangbehälters gestattet, um die Entfernung von Rasenschnitt aus diesem durch den offenen Bereich und die offene Unterseite des Gehäuses zu ermöglichen.

9. Sammelbehälter nach Anspruch 8,
**dadurch gekennzeichnet, dass**
das Außengehäuse (1) eine im Wesentlichen quaderfönnige Gestalt aufweist und zwei Seitenwände besitzt, welche zu den zwei weiteren Wänden (C) des Fangbehälters in entsprechend gegenüberliegender und beabstandeter Weise angeordnet sind, um die räumlich umschlossene Einrichtung zu bilden.

10. Sammelbehälter nach Anspruch 9,
**dadurch gekennzeichnet, dass**
das Außengehäuse eine Einrichtung zur Befestigung eines Sammelbehälters (11) besitzt, so dass während der Schwenkbewegung des Fangbehälters Rasenschnitt vom Fangbehälter in den Sammelbehälter umgelagert wird.

11. Sammelbehälter nach einem oder mehreren der Ansprüche 1 bis 3,
**dadurch gekennzeichnet, dass**
der Fangbehälter einen Einlass (3) zum Eintritt des Rasenschnitts von der Maschine in den Fangbehälter aufweist, und dass die räumlich umschlossene Einrichtung an der Seite des Einlasses (3), entfernt von der Maschine, angeordnet ist.

12. Sammelbehälter nach einem oder mehreren der vorhergehenden Ansprüche,
**dadurch gekennzeichnet, dass**
er der Aufnahme von Rasenschnitt von einem Rasenmäher mit einem Sichelmesser, das sich um eine im Wesentlichen senkrechte Achse dreht, angepasst ist.

13. Rasenmäher,
**dadurch gekennzeichnet, dass**
er einen Sammelbehälter nach einem oder mehreren der Ansprüche 1 bis 11 umfasst, um Rasenschnitt, welcher in einem Luftstrom mitgerissen wird, aufzunehmen, wobei der Rasenmäher derart ausgestaltet ist, dass, falls er sich vorwärts bewegt, der Sammelbehälter in der Bewegungsbahn des Benutzers ist.

14. Rasenmäher nach Anspruch 13,
**dadurch gekennzeichnet, dass**
er weiterhin eine Einrichtung zur lösbaren Entfernung des Sammelbehälters von der Maschine aufweist

15. Rasenmäher nach Anspruch 13 oder 14 sowie einem oder mehreren der Ansprüche 6 bis 11,
**dadurch gekennzeichnet, dass**
das Außengehäuse (1) eine Öffnung aufweist, die auf den Einlass (3) im Fangbehälter ausgerichtet ist.

16. Rasenmäher nach einem oder mehreren der vorhergehenden Ansprüche,
**dadurch gekennzeichnet, dass**
das Außengehäuse (1) eine im Wesentlichen quaderförmige Gestalt mit vier Wänden, einer offenen Unterseite und einem offenen Ende aufweist.

## Revendications

1. Dispositif collecteur pour collecter de l'herbe coupée provenant d'une tondeuse à gazon d'un type qui positionne le dispositif collecteur dans le trajet d'un opérateur lorsque la tondeuse à gazon est déplacée vers l'avant et qui entraine ladite herbe coupée dans un courant d'air, le dispositif comprenant un logement extérieur (1) présentant une base ouverte, un réceptacle de réception pouvant être placé à l'intérieur du logement extérieur (1) pour recevoir l'herbe coupée ainsi entraînée, le réceptacle comprenant au moins une région perméable à l'air qui permet à l'air de sortir du réceptacle de réception, et un dispositif à cavité pour mener l'air de sortie vers le bas depuis le dispositif directement jusqu'au sol à travers la base ouverte du logement extérieur (1), dans lequel le dispositif à cavité est au moins partiellement déterminé par des régions en regard du réceptacle et du logement extérieur, le logement extérieur s'étendant vers la partie inférieure du réceptacle.

2. Dispositif selon la revendication 1, qui comprend de plus une ou plusieurs saillies (P) s'étendant entre le réceptacle et le logement extérieur (1), les saillies (P) et les régions en regard constituant ensemble un moyen de conduite pour guider l'air de sortie depuis le dispositif.

3. Dispositif selon la revendication 2, dans lequel ladite au moins une région perméable à l'air établit un accès entre l'intérieur du réceptacle de réception et le dispositif de conduite.

4. Dispositif selon l'une quelconque des revendications précédentes dans lequel la région du réceptacle qui est en regard du logement extérieur (1) pour définir au moins partiellement le dispositif à cavité comprend la région perméable à l'air.

5. Dispositif selon l'une quelconque des revendications 1 à 4, dans lequel le logement extérieur s'étend vers le bas, en utilisation, sensiblement jusqu'au sol.

6. Dispositif selon l'une quelconque des revendications précédentes dans lequel le réceptacle récepteur comprend une première paroi (A) comprenant une entrée (3) pour l'herbe coupée entrant dans le réceptacle, une base (B), et deux parois supplémentaires (C), chaque paroi supplémentaire (C) étant reliée à la base (B) et à la première paroi (A).

7. Dispositif selon la revendication 6, dans lequel au moins l'une des deux parois supplémentaires (C) comprend la région perméable à l'air.

8. Dispositif selon la revendication 6 ou la revendication 7, dans lequel le réceptacle de réception a une forme générale rectangulaire comportant une surface ouverte en face de la première paroi (A), dans lequel le réceptacle est monté de façon pivotante à l'intérieur du logement extérieur (1) en une position dans la région de la première paroi (A), et la base ouverte du logement extérieur (1) permet un déplacement pivotant du réceptacle pour permettre d'en retirer l'herbe coupée à travers ladite surface ouverte et la base ouverte du logement.

9. Dispositif selon la revendication 8, dans lequel le logement extérieur (1) est de forme générale rectangulaire, et comprend deux parois latérales disposées respectivement en regard des deux parois supplémentaires (C) du réceptacle et de façon écartée par rapport à celles-ci pour constituer le dispositif de cavité.

10. Dispositif selon la revendication 9, dans lequel le logement extérieur (1) comprend un moyen pour lui fixer un collecteur (11) de façon que, pendant le déplacement pivotant du réceptacle, l'herbe coupée provenant du réceptacle alimente le collecteur (11).

11. Dispositif selon l'une quelconque des revendications 1 à 3, dans lequel le réceptacle récepteur comprend une entrée (3) pour de l'herbe coupée entrant dans le réceptacle en provenance de la machine et ledit moyen à cavité est disposé du côté de l'entrée (3) éloigné de la machine.

12. Dispositif selon l'une quelconque des revendications précédentes, conçu et disposé pour collecter de l'herbe coupée depuis une tondeuse à gazon du type comportant une lame de coupe pouvant tourner autour d'un axe général vertical.

13. Machine de coupe de gazon comprenant un dispositif selon l'une quelconque des revendications 1 à 11 pour recevoir de l'herbe coupée entraînée dans un courant d'air, la machine étant conçue de façon que, lorsqu'elle avance, le dispositif collecteur se trouve dans le trajet de l'opérateur.

14. Machine selon la revendication 13 comprenant de plus un moyen pour séparer de façon détachable le dispositif de la machine.

15. Machine selon la revendication 13 ou la revendication 14, telle que dépendant de l'une quelconque des revendications 6 à 11, dans laquelle le logement extérieur (1) comprend une ouverture placée en alignement avec l'entrée (3) du réceptacle de réception.

16. Machine selon l'une quelconque des revendications précédentes, dans laquelle le logement extérieur (1) est d'une forme générale rectangulaire présentant quatre parois, une base ouverte et une extrémité ouverte.
